# FASCICULE DE BREVET EUROPEEN

(11) **EP 2 846 664 B1**
(45) Date de publication et mention de la délivrance du brevet: **23.03.2016**
(21) Numéro de dépôt: 13727268.8
(22) Date de dépôt: 06.05.2013
(51) Int. Cl.: A47J 19/02

(54) **ORGANE DE TRAVAIL ROTATIF ET APPAREIL ÉLECTROMÉNAGER DE PRÉPARATION CULINAIRE COMPORTANT UNE VIS DE PRESSAGE**
ROTIERENDES ARBEITSELEMENT UND ELEKTRISCHES HAUSHALTSGERÄT FÜR DIE ZUBEREITUNG VON LEBENSMITTELN MIT EINER PRESSSCHRAUBE
ROTARY WORKING MEMBER AND ELECTRIC HOUSEHOLD FOOD PREPARATION APPLIANCE COMPRISING A PRESSING SCREW

(30) Priorité: 07.05.2012 FR 1254184
(43) Date de publication de la demande: 18.03.2015
(73) Titulaire: SEB S.A., 69130 Ecully (FR)
(72) Inventeur: DELAVAUD, Fabien, F-64510 Baliros (FR); RAUDE, Christian, F-64160 Buros (FR); SUBERBIE, Nicolas, F-65360 Momeres (FR); GINESTET, David, F-65000 Tarbes (FR)
(74) Mandataire: Cémeli, Eric Philippe Laurent
(86) Numéro de dépôt international: PCT/FR2013/051012
(87) Numéro de publication internationale: WO 2013/167839

(56) Documents cités:
- WO-A1-2012/013150
- CN-U- 202 020 270

## Description

La présente invention concerne le domaine technique des appareils électroménagers de préparation culinaire comportant une vis de pressage agencée dans une enceinte de travail selon un axe de rotation principalement vertical.

La présente invention concerne plus particulièrement les appareils électroménagers de préparation culinaire de type pressoir, comportant une vis de pressage associée à un élément de filtration, pour réaliser des jus ou des coulis, et/ou de type hachoir, comportant une vis de pressage associée à un couteau rotatif en sortie, pour réaliser des préparations hachées.

Le document CN 2 02020270U divulgue une vis de pressage pour appareil extracteur de jus, présentant deux filets principaux intercalés. La partie supérieure de la vis de pressage est plane et chacun des filets principaux s'enroule autour de l'axe de la vis de pressage à partir de la partie supérieure. Un inconvénient de la réalisation présentée est que l'extrémité supérieure libre de chacun des filets principaux forme un bord d'attaque présentant d'une part une distance relativement importante avec l'autre filet s'étendant sous le bord d'attaque, et d'autre part, une pente relativement importante par rapport au plan perpendiculaire à l'axe de la vis. Lors de la rotation d'une telle vis de pressage sous une goulotte d'introduction d'aliments, une quantité relativement importante d'aliments peut être découpée à chaque passage d'un bord d'attaque sous la goulotte d'introduction d'aliments, de plus la hauteur de coupe n'est pas vraiment maîtrisée. Ces dispositions peuvent nuire à l'efficacité de l'appareil si les performances de pressage ne sont pas adaptées au débit d'introduction des aliments.

Un objet de la présente invention est de proposer un organe de travail rotatif pour appareil électroménager de préparation culinaire, qui permette de mieux contrôler l'alimentation d'une vis de pressage, tout en présentant une utilisation simple.

Un autre objet de la présente invention est de proposer un appareil électroménager de préparation culinaire comportant une vis de pressage, dans lequel le débit d'alimentation de l'appareil est mieux contrôlé.

Ces objets sont atteints avec un organe de travail rotatif pour appareil électroménager de préparation culinaire, comprenant une vis de pressage présentant deux filets principaux intercalés agencés autour d'un axe, chaque filet principal étant prolongé par une partie supérieure libre s'étendant jusqu'à un bord supérieur d'attaque prévu pour trancher les aliments, chaque partie supérieure libre ménageant au moins un passage avec le bord supérieur d'attaque de l'autre partie supérieure libre, chaque partie supérieure libre présentant une surface d'appui intermédiaire s'étendant en retrait du bord supérieur d'attaque, caractérisé en ce que chaque surface d'appui intermédiaire est prolongée par une cavité latérale inférieure s'étendant au moins partiellement sous le bord supérieur d'attaque de l'autre partie supérieure libre, la cavité latérale inférieure formant un décrochement par rapport à la surface d'appui intermédiaire. Cette disposition permet de mieux contrôler la dimension de chaque passage ménagé entre l'un des bords supérieurs d'attaque et la partie supérieure libre s'étendant à distance dudit bord supérieur d'attaque. Les aliments découpés sont ainsi collectés dans les cavités latérales inférieures avant d'être pressés et convoyés par les filets de la vis de pressage. Cette disposition permet de réduire la hauteur du passage par rapport à une vis de pressage dont les filets principaux présentent une pente sensiblement constante au niveau dudit passage, et de mieux contrôler la découpe des aliments.

Avantageusement alors, chaque cavité latérale inférieure s'étend sous l'intégralité du bord supérieur d'attaque de l'autre partie supérieure libre. En d'autres termes, toute la longueur de chaque bord supérieur d'attaque s'étend au dessus de la cavité latérale inférieure sous-jacente. Cette disposition permet de ménager un passage d'aliments de section plus importante que lorsque les bords supérieurs d'attaque s'étendent au-delà des cavités latérales inférieures, sans pénaliser le contrôle du débit de découpe. Cette disposition favorise la chute des morceaux d'aliments découpés dans la cavité, et permet de réduire les risques de coincement de morceaux d'aliments entre les bords supérieurs d'attaque et les surfaces d'appui intermédiaires.

Avantageusement encore, chaque surface d'appui intermédiaire présente une section de pente inférieure à 10° et de préférence inférieure à 5° prolongée par la cavité latérale inférieure. Cette disposition favorise l'utilisation d'une goulotte présentant une section d'ouverture importante. La hauteur de coupe de l'aliment peut être mieux maîtrisée. L'aliment reposant sur la surface d'appui intermédiaire peut ainsi occuper une position relativement stable avant d'être tranché par le bord supérieur d'attaque. Si désiré, ladite section peut présenter une pente sensiblement constante. Si désiré, deux goulottes ou une goulotte double agencée(s) en regard de chacune des moitiés de l'organe de travail rotatif peuvent être utilisées.

Selon une forme de réalisation avantageuse, chaque surface d'appui intermédiaire présente une section de raccord formant une marche entre le bord supérieur d'attaque et la section de support de coupe. Cette disposition permet d'obtenir une hauteur de coupe plus importante qu'avec une surface d'appui intermédiaire présentant une pente sensiblement constante, tout en autorisant une section de support de coupe présentant une pente modérée propice à une bonne précision de coupe.

Avantageusement encore, les bords supérieurs d'attaque sont entourés par une couronne périphérique. Cette disposition permet de centrer les aliments dans l'enceinte de travail au dessus de l'organe de travail rotatif, et d'éviter que de petits morceaux se coincent autour de l'organe de travail rotatif.

Avantageusement encore, chaque filet principal présente dans la cavité latérale inférieure une face supérieure inclinée dont la pente diminue à partir de la partie supérieure libre. Cette disposition permet d'éviter l'accumulation de d'aliments dans les cavités latérales inférieures.

Avantageusement encore, chaque bord supérieur d'attaque est fuyant en direction de la périphérie. Cette disposition permet de favoriser le tranchage des aliments.

Avantageusement encore, chaque bord supérieur d'attaque est convexe. Cette disposition permet également de favoriser le tranchage des aliments.

Avantageusement encore, chaque bord supérieur d'attaque appartient à une lame de coupe rapportée sur un corps principal de la vis de pressage. Cette disposition permet d'améliorer l'efficacité de coupe, notamment avec les ingrédients durs tels que les carottes.

Avantageusement encore, les bords supérieurs d'attaque sont agencés autour d'un moyeu supérieur proéminent. Cette disposition permet de simplifier la préhension de l'organe de travail rotatif. Le montage et le retrait de l'organe de travail rotatif sont ainsi facilités.

Ces objets sont atteints également avec un appareil électroménager de préparation culinaire comportant une vis de pressage entrainée en rotation selon un axe principalement vertical dans une enceinte de travail présentant au moins une goulotte d'introduction d'aliments communiquant avec l'extrémité supérieure de la vis de pressage, et une sortie d'évacuation, du fait que la vis de pressage appartient à un organe de travail rotatif selon l'une au moins des caractéristiques précitées.

Avantageusement, l'organe de travail rotatif est monté amovible dans l'enceinte de travail.

Selon une forme de réalisation préférée, l'appareil électroménager de préparation culinaire comporte un boîtier logeant un moteur électrique relié à une sortie d'entraînement supérieure prévue pour l'entraînement de l'organe de travail rotatif.

Selon une forme de réalisation préférée, l'enceinte de travail est montée amovible sur le boîtier. En alternative, le boîtier pourrait être solidaire de l'enceinte de travail.

Selon une forme de réalisation adaptée à l'obtention de jus ou de coulis, un élément de filtration sépare l'enceinte de travail en un premier compartiment logeant l'organe de travail rotatif, et un deuxième compartiment présentant la sortie d'évacuation.

Selon une forme de réalisation adaptée à l'obtention de préparations hachées, au moins une grille et au moins un couteau rotatif sont agencés entre l'organe de travail rotatif et la sortie d'évacuation.

L'invention sera mieux comprise à l'étude d'un exemple de réalisation et d'une variante, pris à titre nullement limitatif, illustré dans les figures annexées, dans lesquelles :
- la figure 1 illustre un exemple d'appareil électroménager de préparation culinaire selon l'invention, représenté en élévation et en coupe partielle, le boîtier logeant le moteur étant représenté schématiquement,
- la figure 2 est une vue en perspective de dessus d'un élément de filtration logé dans l'enceinte de travail de l'appareil représenté sur la figure 1, la figure 3 illustrant l'élément de filtration et le récipient de travail de l'appareil illustré sur la figure 1 selon une autre orientation,
- les figures 4 et 5 sont deux vues en perspective de dessus d'un organe de travail rotatif selon l'invention, logé dans l'enceinte de travail de l'appareil illustré sur la figure 1,
- la figure 6 montre la sortie d'entraînement supérieure et une partie du boîtier de l'appareil illustré sur la figure 1,
- la figure 7 illustre une variante de réalisation d'un organe de travail rotatif selon l'invention, logé dans l'enceinte de travail de l'appareil illustré sur la figure 1.

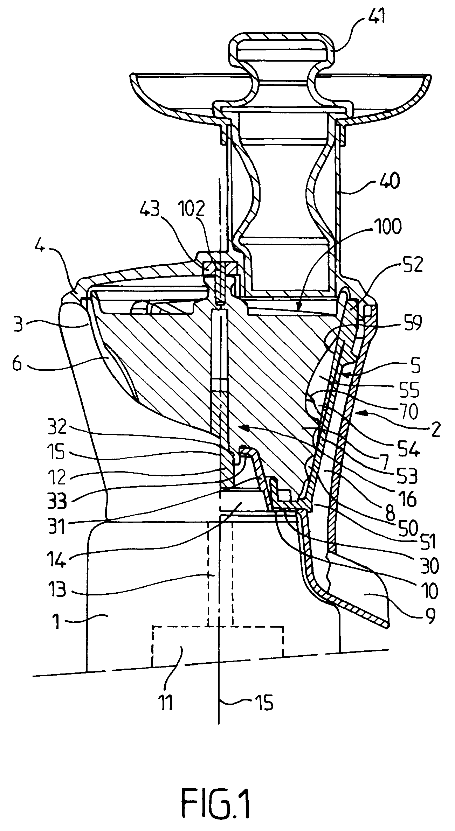

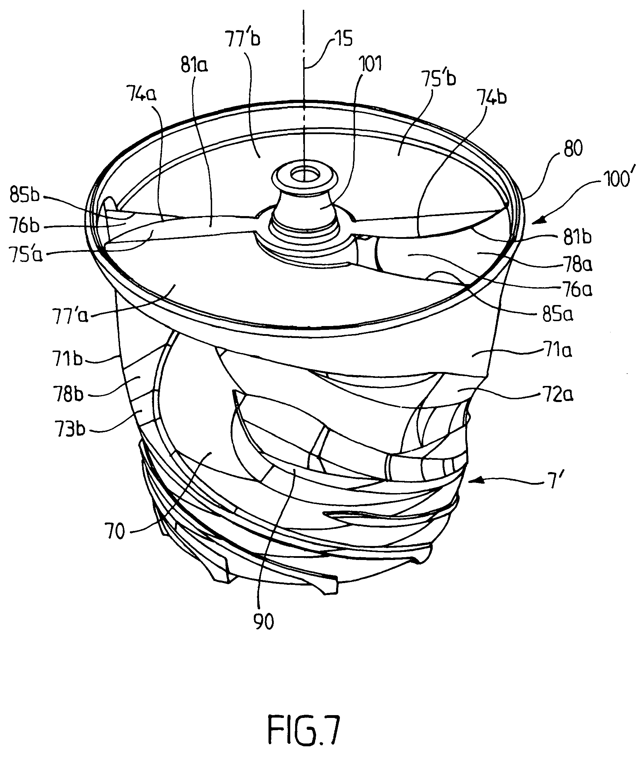

L'appareil électroménager de préparation culinaire illustré sur la figure 1 comporte un boîtier 1 et une enceinte de travail 2 présentant une goulotte d'introduction d'aliments 40 et une sortie d'évacuation 9. Un organe de travail rotatif 100 est entrainé en rotation selon un axe 15 principalement vertical dans l'enceinte de travail 2. L'organe de travail rotatif 100 comprend une vis de pressage 7. La goulotte d'introduction d'aliments 40 communique avec l'extrémité supérieure de l'organe de travail rotatif 100. Une variante de réalisation d'un organe de travail rotatif 100' comportant une vis de pressage 7' est illustré sur la figure 7.

Dans l'exemple de réalisation illustré sur la figure 1, l'enceinte de travail 2 comporte un récipient de travail 3 fermé par un couvercle 4. Le récipient de travail 3 présente la sortie d'évacuation 9. Un élément de filtration 5 sépare l'enceinte de travail 2 en un premier compartiment 6 logeant l'organe de travail rotatif 100, et un deuxième compartiment 8 présentant la sortie d'évacuation 9. Le boîtier 1 forme un socle 10 sur lequel repose le récipient de travail 3. Le boîtier 1 loge un moteur électrique 11, représenté schématiquement. Le moteur électrique 11 est relié à une sortie d'entraînement supérieure 12, si désiré par l'intermédiaire d'un dispositif de transmission 13, représenté schématiquement. La sortie d'entraînement supérieure 12 est agencée sur le socle 10.

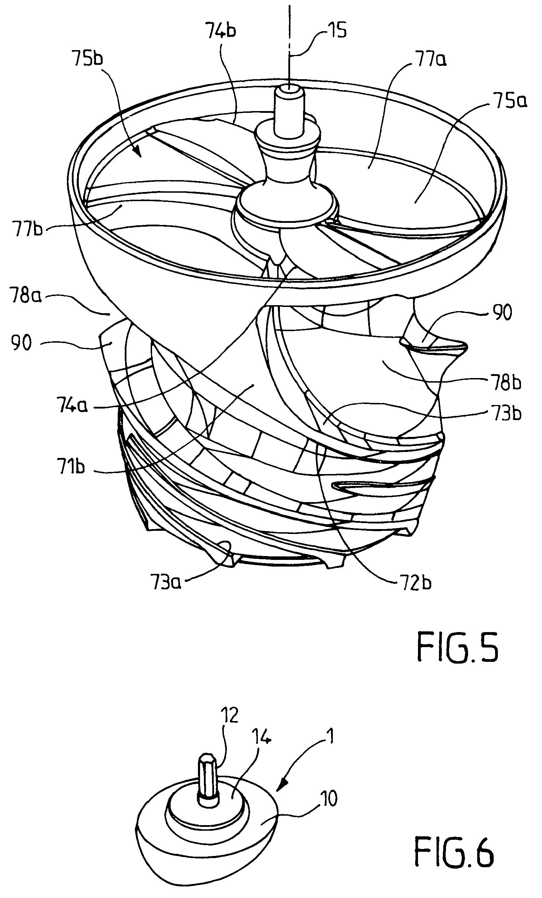

Plus particulièrement, tel que visible sur les figures 1 et 6, la sortie d'entraînement supérieure 12 sort d'une protubérance 14 du socle 10. La sortie d'entraînement supérieure 12 est entraînée en rotation autour d'un axe 15. La sortie d'entraînement supérieure 12 est prévue pour l'entraînement de l'organe de travail rotatif 100, si désiré par l'intermédiaire d'un organe de transmission.

Dans l'exemple de réalisation illustré sur la figure 1, le récipient de travail 3 est monté amovible sur le boîtier 1. L'enceinte de travail 2 est ainsi montée amovible sur le boîtier 1. L'élément de filtration 5 est monté amovible dans le récipient de travail 3. L'organe de travail rotatif 100 est monté amovible dans l'enceinte de travail 2.

Le récipient de travail 3 présente une ouverture supérieure fermée par le couvercle 4. La sortie d'évacuation 9 est ménagée dans une partie inférieure du récipient de travail 3 à l'extérieur de l'élément de filtration 5. Le récipient de travail 3 présente une paroi de fond 30 comportant un bossage axial 31 prévu pour coiffer la protubérance 14.

Le récipient de travail 3 est prévu pour le passage d'un moyen de transmission 16 entre le moteur électrique 11 et l'organe de travail rotatif 100. A cet effet le bossage axial 31 présente une ouverture axiale 32. Un joint 33 est avantageusement monté dans l'ouverture axiale 32 pour assurer une étanchéité avec le moyen de transmission 16.

Le couvercle 4 peut être verrouillé sur le récipient de travail 3, notamment au moyen de baïonnettes (non représentées sur les figures). Le couvercle 4 présente la goulotte d'introduction d'aliments 40. La goulotte d'introduction d'aliments 40 est disposée latéralement par rapport à l'axe de l'organe de travail rotatif 100. Un poussoir 41 est agencé dans la goulotte d'introduction d'aliments 40.

L'élément de filtration 5 comporte au moins une partie filtrante 55 agencée en regard de la vis de pressage 7. Pour faciliter l'extraction du jus, la ou les parties filtrantes 55 sont agencées principalement entre la vis de pressage 7 et la sortie d'évacuation 9.

Tel que représenté sur la figure 1, l'élément de filtration 5 entoure la vis de pressage 7. L'élément de filtration comporte avantageusement une base 51 et une couronne supérieure 52, la ou les partie filtrantes 55 étant agencées entre la base 51 et la couronne supérieure 52. Un anneau intermédiaire 53 peut être agencé entre la base 51 et la couronne supérieure 52. Plus particulièrement, l'élément de filtration 5 repose sur la paroi de fond 30 du récipient de travail 3. Le couvercle 4 maintient la couronne supérieure 52 de l'élément de filtration 5.

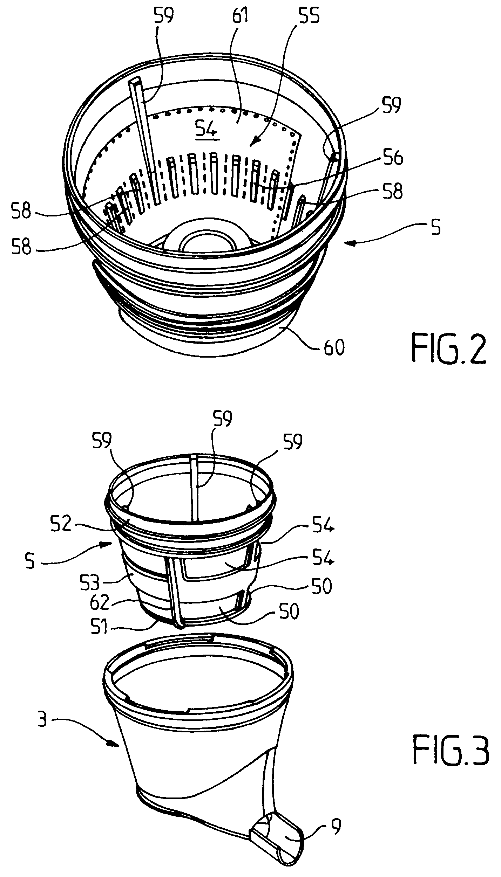

Tel que visible sur la figure 2, un anneau intermédiaire 53 peut être agencé entre la base 51 et la couronne supérieure 52. L'élément de filtration 5 comporte une zone interne nervurée 56 s'étendant au dessus d'une partie filtrante inférieure 50. La zone interne nervurée 56 présente par exemple une série de nervures intermédiaires 58 verticales. Avantageusement la zone interne nervurée 56 s'étend au-delà de la ou des parties filtrantes 56. La zone interne nervurée 56 est de préférence annulaire pour favoriser le broyage des aliments tout autour de la vis de pressage 7. Tel que visible sur les figures 1 à 3, l'élément de filtration 5 présente au moins une partie filtrante supérieure 54 s'étendant au dessus de la zone interne nervurée 56. Tel que visible sur les figures 1 à 3, l'élément de filtration 5 comporte au moins une nervure supérieure 59 s'étendant au dessus de la ou des parties filtrantes supérieures. La ou les nervures supérieures 59 coopèrent avec les filets de la partie supérieure de la vis de pressage 7 pour favoriser le convoyage des aliments vers les zones de pressage au niveau de la ou des parties filtrantes 55.

Tel que représenté sur les figures 1 à 3, l'élément de filtration 5 comporte un corps de filtre 60 en matière plastique surmoulé sur au moins une tôle métallique perforée 61 formant la ou les parties filtrantes 55. La ou les nervures supérieures 59 et les nervures intermédiaires 58 peuvent ainsi être directement issues du corps de filtre 60. D'autres modes de réalisation peuvent toutefois être envisagés, comme une ou plusieurs parties filtrantes 55 rapportées par collage sur le corps de filtre 60 ou insérées contre des conformations de retenue du corps de filtre 60.

L'élément de filtration 5 est indexé par rapport au récipient de travail 3 par tout moyen connu tel que notamment une ou plusieurs conformations 62.

Plus particulièrement, la vis de pressage 7 repose sur l'élément de filtration 5. La vis de pressage 7 amovible est susceptible d'être entraînée en rotation par la sortie d'entraînement supérieure 12, mieux visible sur la figure 6.

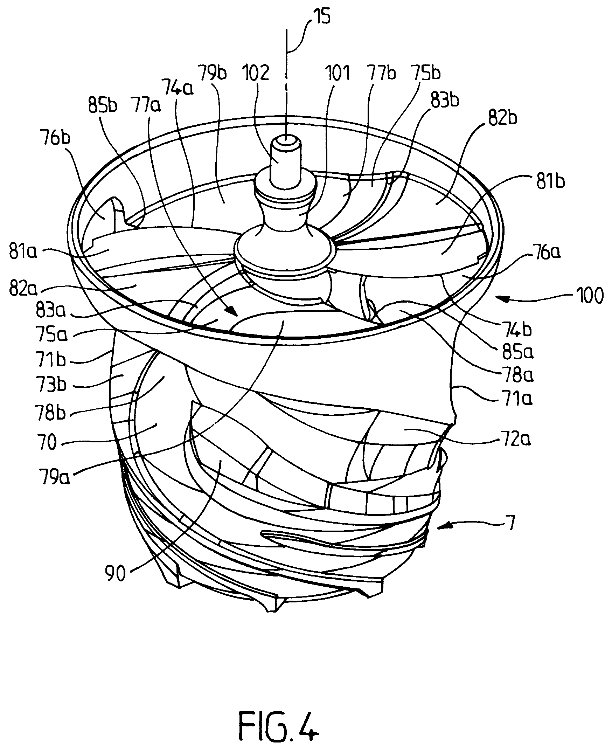

Tel que visible sur les figures 1, 4 et 5, la vis de pressage 7 comporte un corps de vis 70 muni de filets prévus pour pousser les aliments contre l'élément de filtration 5. Tel que mieux visible sur les figures 4, 5 et 7, la vis de pressage 7 ; 7' présente deux filets principaux 71 a, 71 b intercalés agencés autour d'un axe 15. Les filets principaux 71 a, 71 b sont agencés de manière opposée. La vis de pressage 7 ; 7' présente ainsi une symétrie d'ordre 2 permettant de mieux répartir les aliments à presser autour de la vis de pressage 7 ; 7'.

Chaque filet principal 71 a, 71 b présente une face inférieure 72a, 72b et une face supérieure 73a, 73b. Chaque filet principal 71 a, 71 b est prolongé par une partie supérieure libre 75a, 75b ; 75'a, 75'b s'étendant jusqu'à un bord supérieur d'attaque 74a, 74b prévu pour trancher les aliments. L'organe de travail rotatif 100 combine ainsi sur le corps de vis 70 un dispositif de prédécoupe comprenant les bords supérieurs d'attaque 74a, 74b avec un dispositif de pressage formé par les filets s'étendant autour du corps de vis 70, dont les filets principaux 71 a, 71 b.

Chaque partie supérieure libre 75a, 75b ; 75'a, 75'b ménage au moins un passage 76a, 76b avec le bord d'attaque 74b, 74a de l'autre partie supérieure libre 75b, 75a ; 75'b, 75'a. Chaque partie supérieure libre 75a, 75b ; 75'a, 75'b présente une surface d'appui intermédiaire 77a, 77b ; 77'a, 77'b s'étendant en retrait du bord supérieur d'attaque 74a, 74b, par rapport à l'axe 15. Chaque surface d'appui intermédiaire 77a, 77b ; 77'a, 77'b est prolongée par une cavité latérale inférieure 78a, 78b s'étendant au moins partiellement sous le bord supérieur d'attaque 74b, 74a de l'autre partie supérieure libre 75b, 75a ; 75'b, 75'a, la cavité latérale inférieure 78a, 78b formant un décrochement par rapport à la surface d'appui intermédiaire 77a, 77b ; 77'a, 77'b. En d'autres termes, une rupture de pente est présente entre la surface d'appui intermédiaire 77a, 77b ; 77'a, 77'b et la cavité latérale inférieure 78a, 78b. Si désiré la face supérieure 73a, 73b de chaque filet principal 71 a, 71 b peut se prolonger en direction de la surface d'appui intermédiaire 77a, 77b ; 77'a, 77'b correspondante.

Chaque surface d'appui intermédiaire 77a, 77b ; 77'a, 77'b présente un bord inférieur d'appui 85a, 85b débouchant en partie supérieure de la cavité latérale inférieure 78a, 78b. Dans chacune des cavités latérales inférieures 78a, 78b la pente de la face supérieure 73a, 73b de chaque filet principal 71 a, 71 b diminue à partir de la partie supérieure libre 75a, 75b ; 75'a, 75'b, plus particulièrement à partir du bord inférieur d'appui 85a, 85b. Ainsi chaque partie supérieure libre 75a, 75b ; 75'a, 75'b comporte au moins une portion inclinée présentant une pente moindre qu'une portion adjacente de la face supérieure 73a, 73b recouverte par l'autre filet principal 71 b, 71 a. En d'autres termes, chaque filet principal 71 a, 71 b présente une face supérieure 73a, 73b inclinée dont la pente dans la cavité latérale inférieure 78a, 78b diminue à partir de la partie supérieure libre 75a, 75b ; 75'a, 75'b.

Selon une forme de réalisation préférée, chaque bord supérieur d'attaque 74a, 74b appartient à une lame de coupe 81 a, 81 b rapportée sur le corps principal 70 de la vis de pressage 7 ; 7'. Les lames de coupe 81 a, 81 b sont avantageusement métalliques et peuvent par exemple être assemblées par surmoulage d'un corps principal réalisé en matière plastique, par exemple en PBT. En alternative les lames de coupe 81a, 81b pourraient notamment être rivetées ou vissées sur le corps principal 70.

Plus particulièrement dans l'exemple de réalisation et la variante illustrés sur les figures, chaque cavité latérale inférieure 78a, 78b s'étend sous l'intégralité du bord supérieur d'attaque 74b, 74a de l'autre partie supérieure libre 75b, 75a ; 75'b, 75'a. Chaque surface d'appui intermédiaire 77a, 77b ; 77'a ; 77'b présente une section de support de coupe 79a, 79b ; 79'a ; 79'b de pente inférieure à 10° et de préférence inférieure à 5°, prolongée par la cavité latérale inférieure 78a, 78b. Pour une meilleure stabilité des aliments lors de la découpe, la section de support de coupe 79a, 79b ; 79'a ; 79'b peut présenter une pente sensiblement constante. De préférence, la section de support de coupe 79a, 79b ; 79'a ; 79'b s'étend sur au moins un huitième, et de préférence au moins un sixième de la périphérie de la circonférence de la partie supérieure de la vis de pressage 7 ; 7'.

Dans l'exemple de réalisation illustré sur les figures 1, 4 et 5, chaque surface d'appui intermédiaire 77a, 77b présente une section de raccord 83a, 83b formant une marche entre le bord supérieur d'attaque 74a, 74b et la section de support de coupe 79a, 79b. Plus particulièrement, chaque surface d'appui intermédiaire 77a, 77b présente une pente variable, la pente de la section de raccord 83a, 83b étant supérieure à la pente de la section de support de coupe 79a, 79b. Le bord supérieur d'attaque 74a, 74b est prolongé par une section supérieure 82a, 82b présentant une pente moindre que la pente de la section de raccord 83a, 83b.

La variante de réalisation illustrée sur la figure 7 diffère de l'exemple de réalisation illustré sur les figures 1, 4 et 5 en ce que la surface d'appui intermédiaire 77'a, 77'b présente une section de pente constante s'étendant entre la lame de coupe 81 a, 81 b et la cavité latérale inférieure 78a, 78b.

Les filets principaux 71 a, 71 b s'élargissent vers l'extrémité supérieure de la vis de pressage 7 ; 7'. Chacun des filets principaux 71 présente une face inférieure 72a, 72b s'étendant sur au moins un quart de la circonférence de la vis de pressage 7 ; 7', et de préférence sur au moins la moîtié de la circonférence de la vis de pressage 7 ; 7', tel que visible sur les figure 4 et 7. Les filets principaux 71 a, 71 b s'étendent sur au moins les deux tiers de la hauteur de la vis de pressage 7 ; 7' selon l'axe 15, tel que visible sur la figure 4, 5 et 7.

Tel que visible sur les figures 4, 5 et 7, au moins un filet secondaire 90 agencé entre deux filets principaux 71 a, 71 b s'interrompt à distance de l'extrémité supérieure de la vis de pressage 7 ; 7', plus particulièrement à distance de la cavité latérale inférieure 78a, 78b.

Plus particulièrement dans l'exemple de réalisation et la variante illustrés sur les figures, les bords supérieurs d'attaque 74a, 74b sont entourés par une couronne périphérique 80. Les bords supérieurs d'attaque 74a, 74b sont agencés autour d'un moyeu supérieur 101 proéminent, prévu pour assurer le guidage supérieur de l'organe de travail rotatif 100. Si désiré, le moyeu supérieur 101 peut porter un tenon 102 prévu pour tourner dans un palier 43 agencé dans le couvercle 4. Chaque bord supérieur d'attaque 74a, 74b est convexe. Chaque bord supérieur d'attaque 74a, 74b est fuyant en direction de la périphérie. Chaque bord supérieur d'attaque 74a, 74b s'étend au moins partiellement au dessus de l'une des cavités latérales inférieures 78a, 78b. Chaque bord supérieur d'attaque 74a, 74b présente une face supérieure 81 a, 81 b plane. Ainsi la face supérieure plane 81 a, 81 b de chaque bord supérieur d'attaque 74a, 74b est perpendiculaire à l'axe 15 de rotation de la vis de pressage 7 ; 7'.

L'appareil selon l'invention s'utilise et fonctionne de la manière suivante.

L'utilisateur positionne l'organe de travail rotatif 100, 100' dans l'enceinte de travail 2, ferme l'enceinte de travail 2 et met en marche l'appareil. Les bords supérieurs d'attaque 74a, 74b balayent successivement l'ouverture inférieure de la goulotte d'introduction d'aliments 40. Un aliment introduit dans la goulotte d'introduction d'aliments 40 peut prendre appui sur l'une des surface d'appui intermédiaire 77a, 77b de l'un des filets principaux 71 a, 71 b avant d'être tranché par le bord supérieur d'attaque 74b, 74a de l'autre filet principal 71 b, 71a.

La hauteur réduite du passage 76a, 76b par rapport à l'axe 15 de rotation de l'organe de travail rotatif 100 ; 100' permet de bien contrôler le débit de coupe des aliments et la quantité d'aliments découpés introduits entre les filets principaux 71a, 71 b. Le risque d'une alimentation de l'appareil au-delà des performances de la vis de pressage 7, 7' peut être plus facilement évité. Par ailleurs, la découpe de morceaux de taille suffisamment importante favorise la descente de ces morceaux dans les cavités latérales inférieures 78a, 78b et leur pressage par les filets de la vis de pressage 7, 7'. De plus les bords supérieurs d'attaque 74a, 74b intégrés au corps principal 70 de la vis de pressage 7 ; 7' facilitent la manipulation et l'utilisation de l'organe de travail rotatif 100 ; 100'.

La présence de deux filets principaux opposés favorise une répartition plus équilibrée des aliments autour de la vis de pressage 7 ; 7', notamment dans la partie supérieure de la vis de pressage 7 ; 7', ce qui favorise une bonne rotation de la vis de pressage 7 ; 7'. Un fonctionnement plus régulier, moins sujet aux à-coups peut ainsi être obtenu, ce qui permet de simplifier le maintien et/ou l'entrainement de l'organe de travail rotatif 100 ; 100'.

A titre de variante, la partie supérieure libre 75a, 75b de chaque filet principal 71 a, 71 b ne ménage pas nécessairement un seul passage 76a, 76b avec le bord supérieur d'attaque 74b, 74a de l'autre partie supérieure libre 75b, 75a ; 75'b, 75'a. Si désiré, l'organe de travail rotatif 100 ; 100' pourrait notamment présenter au moins un organe de coupe s'étendant entre un bord supérieur d'attaque 74b, 74a et la partie supérieure libre 75a, 75b ; 75'a ; 75'b associée, par exemple une lame de coupe séparant deux passages 76a, 76b distincts en dessous de chaque bord supérieur d'attaque 74a, 74b.

A titre de variante, l'axe 15 n'est pas nécessairement agencé selon la direction verticale, mais peut être agencé selon une direction principalement verticale, présentant un angle inférieur ou égal à 45° par rapport à la direction verticale.

A titre de variante l'organe de travail rotatif 100; 100' pourrait être agencé dans un récipient de travail 3 formant un conduit reliant la goulotte d'introduction d'aliments à la sortie d'évacuation, une grille et un couteau rotatif étant agencés entre la vis de pressage et la sortie d'évacuation, pour hacher les aliments compressés par la vis de pressage 7. L'enceinte de travail 2 ne loge alors pas nécessairement un élément de filtration 5.

A titre de variante, le récipient de travail 3 pourrait être solidaire du boîtier 1.

A titre de variante, l'enceinte de travail 2 ne comporte pas nécessairement un récipient 3 fermé par un couvercle 4. Notamment, le couvercle 4 pourrait être verrouillé sur l'élément de filtration 5.

A titre de variante, une autre sortie d'évacuation pourrait être envisagée pour évacuer les résidus du premier compartiment 6 vers l'extérieur et/ou vers un réceptacle à déchets.

La présente invention n'est nullement limitée aux exemples de réalisation décrits, mais englobe de nombreuses modifications dans le cadre des revendications.

## Revendications

1. Organe de travail rotatif (100; 100') pour appareil électroménager de préparation culinaire, comprenant une vis de pressage (7 ; 7') présentant deux filets principaux (71 a, 71 b) intercalés agencés autour d'un axe (15), chaque filet principal (71 a, 71 b) étant prolongé par une partie supérieure libre (75a, 75b ; 75'a, 75'b) s'étendant jusqu'à un bord supérieur d'attaque (74a, 74b) prévu pour trancher les aliments, chaque partie supérieure libre (75a, 75b ; 75'a, 75'b) ménageant au moins un passage (76a, 76b) avec le bord supérieur d'attaque (74b, 74a) de l'autre partie supérieure libre (75b, 75a ; 75'b, 75'a), chaque partie supérieure libre (75a, 75b ; 75'a, 75'b) présentant une surface d'appui intermédiaire (77a, 77b ; 77'a, 77'b) s'étendant en retrait du bord supérieur d'attaque (74a, 74b), **caractérisé en ce que** ladite surface d'appui intermédiaire (77a, 77b ; 77'a, 77'b) est prolongée par une cavité latérale inférieure (78a, 78b) s'étendant au moins partiellement sous le bord supérieur d'attaque (74b, 74a) de l'autre partie supérieure libre (75b, 75a ; 75'b, 75'a), la cavité latérale inférieure (78a, 78b) formant un décrochement par rapport à la surface d'appui intermédiaire (77a, 77b ; 77'a, 77'b).

2. Organe de travail rotatif (100 ; 100') selon la revendication 1, **caractérisé en ce que** chaque cavité latérale inférieure (78a, 78b) s'étend sous l'intégralité du bord supérieur d'attaque (74b, 74a) de l'autre partie supérieure libre (75b, 75a ; 75'b, 75'a).

3. Organe de travail rotatif (100 ; 100') selon l'une des revendications 1 ou 2, **caractérisé en ce que** chaque surface d'appui intermédiaire (77a, 77b ; 77'a ; 77'b) présente une section de support de coupe (79a, 79b ; 79'a ; 79'b) de pente inférieure à 10° et de préférence inférieure à 5°, prolongée par la cavité latérale inférieure (78a, 78b).

4. Organe de travail rotatif (100) selon la revendication 3, **caractérisé en ce que** chaque surface d'appui intermédiaire (77a, 77b) présente une section de raccord (83a, 83b) formant une marche entre le bord supérieur d'attaque (74a, 74b) et la section de support de coupe (79a, 79b).

5. Organe de travail rotatif (100) selon l'une des revendications 1 à 4, **caractérisé en ce que** les bords supérieurs d'attaque (74b, 74a) sont entourés par une couronne périphérique (80).

6. Organe de travail rotatif (100 ; 100') selon l'une des revendications 1 à 5, **caractérisé en ce que** chaque filet principal (71 a, 71 b) présente dans la cavité latérale inférieure (78a, 78b) une face supérieure (73a, 73b) inclinée dont la pente diminue à partir de la partie supérieure libre (75a, 75b).

7. Organe de travail rotatif (100 ; 100') selon l'une des revendications 1 à 6, **caractérisé en ce que** chaque bord supérieur d'attaque (74a, 74b) est fuyant en direction de la périphérie.

8. Organe de travail rotatif (100 ; 100') selon l'une des revendications 1 à 7, **caractérisé en ce que** chaque bord supérieur d'attaque (74a, 74b) est convexe.

9. Organe de travail rotatif (100 ; 100') selon l'une des revendications 1 à 8, **caractérisé en ce que** chaque bord supérieur d'attaque (74a, 74b) appartient à une lame de coupe (81 a, 81 b) rapportée sur un corps principal (70) de la vis de pressage (7 ; 7').

10. Organe de travail rotatif (100 ; 100') selon l'une des revendications 1 à 9, **caractérisé en ce que** les bords supérieurs d'attaque (74a, 74b ; 74'a, 74'b) sont agencés autour d'un moyeu supérieur (101 ; 101') proéminent.

11. Appareil électroménager de préparation culinaire, comportant une vis de pressage (7; 7') entraînée en rotation selon un axe (15; 15') principalement vertical dans une enceinte de travail (2) présentant au moins une goulotte d'introduction d'aliments (40) communiquant avec l'extrémité supérieure de la vis de pressage (7 ; 7'), et une sortie d'évacuation (9), **caractérisé en ce que** la vis de pressage (7 ; 7') appartient à un organe de travail rotatif (100; 100') selon l'une des revendications 1 à 10.

12. Appareil électroménager de préparation culinaire selon la revendication 11, **caractérisé en ce que** l'organe de travail rotatif (100 ; 100') est monté amovible dans l'enceinte de travail (2).

13. Appareil électroménager de préparation culinaire selon l'une des revendications 11 ou 12, **caractérisé en ce qu'**il comporte un boîtier (1) logeant un moteur électrique (11) relié à une sortie d'entraînement supérieure (12) prévue pour l'entraînement de l'organe de travail rotatif (100 ; 100').

14. Appareil électroménager de préparation culinaire selon la revendication 13, **caractérisé en ce que** l'enceinte de travail (2) est montée amovible sur le boîtier (1).

15. Appareil électroménager de préparation culinaire selon l'une des revendications 11 à 14, **caractérisé en ce qu'**un élément de filtration (5) sépare l'enceinte de travail (2) en un premier compartiment (6) logeant l'organe de travail rotatif (100 ; 100'), et un deuxième compartiment (8) présentant la sortie d'évacuation (9).

## Patentansprüche

1. Drehendes Arbeitselement (100; 100') für Elektrohaushaltsgeräte zur Zubereitung von Speisen, umfassend eine Pressschnecke (7; 7') mit zwei zwischengeschalteten Hauptgewindegängen (71 a, 71 b), die um eine Achse (15) angeordnet sind, wobei jeder Hauptgewindegang (71 a, 71 b) durch einen oberen freien Teil (75a, 75b; 75'a, 75'b) verlängert wird, der sich bis zur oberen Anschnittsfläche (74a, 74b) erstreckt, die für das Schneiden von Lebensmitteln vorgesehen ist, wobei jeder obere freie Teil (75a, 75b; 75'a, 75'b) mindestens einen Durchgang (76a, 76b) mit der oberen Anschnittsfläche (74b, 74a) des anderen oberen freien Teils (75b, 75a; 75'b, 75'a) bildet und jeder freie obere Teil (75a, 75b; 75'a, 75'b) eine zwischengelagerte Auflagefläche (77a, 77b; 77'a, 77'b) umfasst, die sich eingerückt von der oberen Anschnittsfläche (74a, 74b) erstreckt, **dadurch gekennzeichnet, dass** die vorgenannte zwischengelagerte Auflagefläche (77a, 77b; 77'a, 77'b) durch einen seitlichen unteren Hohlraum (78a, 78b) verlängert wird, der sich mindestens in Teilen unterhalb der oberen Anschnittsfläche (74b, 74a) des anderen oberen freien Teils (75b, 75a; 75'b, 75'a) erstreckt, wobei der seitliche untere Hohlraum (78a, 78b) in Bezug auf die zwischengelagerte Auflagefläche (77a, 77b; 77'a, 77'b) einen Rücksprung bildet.

2. Drehendes Arbeitselement (100; 100') nach Anspruch 1, **dadurch gekennzeichnet, dass** sich jeder seitliche untere Hohlraum (78a, 78b) unterhalb der gesamten oberen Anschnittsfläche (74b, 74a) des anderen oberen freien Teils (75b, 75a; 75'b, 75'a) erstreckt.

3. Drehendes Arbeitselement (100; 100') nach einem der Ansprüche 1 oder 2, **dadurch gekennzeichnet, dass** jede zwischengelagerte Auflagefläche (77a, 77b; 77'a; 77'b) einen Abschnitt einer Schneidhalterung (79a, 79b; 79'a; 79'b) mit einer Neigung von weniger als 10 ° und vorzugsweise weniger als 5 ° aufweist, verlängert durch den seitlichen unteren Hohlraum (78a, 78b).

4. Drehendes Arbeitselement (100) nach Anspruch 3, **dadurch gekennzeichnet, dass** jede zwischengelagerte Auflagefläche (77a, 77b) einen Verbindungsabschnitt (83a, 83b) aufweist, der zwischen der oberen Anschnittsfläche (74a, 74b) und dem Abschnitt der Schneidhalterung (79a, 79b) eine Stufe bildet.

5. Drehendes Arbeitselement (100) nach einem der Ansprüche 1 bis 4, **dadurch gekennzeichnet, dass** die oberen Anschnittsflächen (74b, 74a) von einem peripheren Kranz (80) umgeben sind.

6. Drehendes Arbeitselement (100; 100') nach einem der Ansprüche 1 bis 5, **dadurch gekennzeichnet, dass** jeder Hauptgewindegang (71 a, 71 b) im seitlichen unteren Hohlraum (78a, 78b) eine obere geneigte Fläche (73a, 73b) aufweist, deren Neigung ausgehend vom oberen freien Teil (75a, 75b) abnimmt.

7. Drehendes Arbeitselement (100; 100') nach einem der Ansprüche 1 bis 6, **dadurch gekennzeichnet, dass** jede obere Anschnittsfläche (74a, 74b) in Richtung der Außenseite spitz zuläuft.

8. Drehendes Arbeitselement (100; 100') nach einem der Ansprüche 1 bis 7, **dadurch gekennzeichnet, dass** jede obere Anschnittsfläche (74a, 74b) konvex ist.

9. Drehendes Arbeitselement (100; 100') nach einem der Ansprüche 1 bis 8, **dadurch gekennzeichnet, dass** jede obere Anschnittsfläche (74a, 74b) einer Schneidklinge (81 a, 81 b) zugeordnet ist, die auf einen Hauptteil (70) der Pressschnecke (7; 7') aufgesetzt ist.

10. Drehendes Arbeitselement (100; 100') nach einem der Ansprüche 1 bis 9, **dadurch gekennzeichnet, dass** die oberen Anschnittsflächen (74a, 74b; 74'a, 74'b) um eine vorspringende obere Nabe (101; 101') angeordnet sind.

11. Elektrohaushaltsgerät zur Zubereitung von Speisen, umfassend eine angetriebene Pressschnecke (7; 7'), die sich entlang einer im Wesentlichen vertikalen Hauptachse (15; 15') in einem Arbeitsraum (2) dreht, der mindestens einen Einführschacht (40) für Lebensmittel, der mit dem oberen Ende der Pressschnecke (7; 7') kommuniziert, und eine Ablassöffnung (9) umfasst, **dadurch gekennzeichnet, dass** die Pressschnecke (7; 7') zu einem drehenden Arbeitselement (100; 100') nach einem der Ansprüche 1 bis 10 gehört.

12. Elektrohaushaltsgerät zur Zubereitung von Speisen nach Anspruch 11, **dadurch gekennzeichnet, dass** das drehende Arbeitselement (100; 100') abnehmbar im Arbeitsraum (2) montiert ist.

13. Elektrohaushaltsgerät zur Zubereitung von Speisen nach einem der Ansprüche 11 oder 12, **dadurch gekennzeichnet, dass** es ein Gehäuse (1) umfasst, in dem sich ein Elektromotor (11) befindet, der zwecks Antrieb des drehenden Arbeitselements (100; 100') mit einem oberen Antriebsausgang (12) verbunden ist.

14. Elektrohaushaltsgerät zur Zubereitung von Speisen nach Anspruch 13, **dadurch gekennzeichnet, dass** der Arbeitsraum (2) so auf das Gehäuse (1) montiert ist, dass er abgenommen werden kann.

15. Elektrohaushaltsgerät zur Zubereitung von Speisen nach einem der Ansprüche 11 bis 14, **dadurch gekennzeichnet, dass** ein Filterelement (5) den Arbeitsraum (2) in eine erste Kammer (6) mit dem drehenden Arbeitselement (100; 100') und eine zweite Kammer (8) mit der Auslassöffnung (9) unterteilt.

## Claims

1. Rotary working member (100; 100') for food preparation household electrical appliance, comprising a pressing screw (7; 7') having two main meshed threads (71 a, 71 b) arranged about a shaft (15), each main thread (71 a, 71 b) being extended by a free upper part (75a, 75b; 75'a, 75'b) extending to an upper leading edge (74a, 74b) designed to slice the foods, each free upper part (75a, 75b; 75'a, 75'b) forming at least one passage (76a, 76b) with the upper leading edge (74b, 74a) of the other free upper portion (75b, 75a; 75'b, 75'a), each free upper part (75a, 75b; 75'a, 75'b) having an intermediate bearing surface (77a, 77b; 77'a, 77'b) extending back from the upper leading edge (74a, 74b), **characterised in that** said intermediate bearing surface (77a, 77b; 77'a, 77'b) is extended by a lower lateral cavity (78a, 78b) extending at least partially under the upper leading edge (74b, 74a) of the other free upper part (75b, 75a; 75'b, 75'a), the lower lateral cavity (78a, 78b) forming a recess with respect to the intermediate bearing surface (77a, 77b; 77'a, 77'b).

2. Rotary working member (100; 100') according to claim 1, **characterised in that** each lower lateral cavity (78a, 78b) extends under the entire upper leading edge (74b, 74a) of the other free upper part (75b, 75a ; 75'b, 75'a).

3. Rotary working member (100; 100') according to claim 1 or 2, **characterised in that** each intermediate bearing surface (77a, 77b; 77'a, 77'b) comprises a cutting support section (79a, 79b; 79'a, 79'b) of slope less than 10° and preferably less than 5°, extended by the lower lateral cavity (78a, 78b).

4. Rotary working member (100) according to claim 3, **characterised in that** each intermediate bearing surface (77a, 77b) has a connecting section (83a, 83b) forming a step between the upper leading edge (74a, 74b) and the cutting support section (79a, 79b).

5. Rotary working member (100) according to one of claims 1 to 4, **characterised in that** the upper leading edges (74b, 74a) are surrounded by a peripheral ring (80).

6. Rotary working member (100; 100') according to one of claims 1 to 5, **characterised in that** each main thread (71 a, 71 b) has in the lower lateral cavity (78a, 78b) an inclined upper side (73a, 73b) whose slope decreases from the free upper part (75a, 75b).

7. Rotary working member (100; 100') according to one of claims 1 to 6, **characterised in that** each upper leading edge (74a, 74b) trails towards the periphery.

8. Rotary working member (100; 100') according to one of claims 1 to 7, **characterised in that** each upper leading edge (74a, 74b) is convex.

9. Rotary working member (100; 100') according to one of claims 1 to 8, **characterised in that** each upper leading edge (74a, 74b) is part of a cutting blade (81 a, 81 b) attached to a main body (70) of the pressing screw (7; 7').

10. Rotary working member (100; 100') according to one of claims 1 to 9, **characterised in that** the upper leading edges (74a, 74b; 74'a, 74'b) are arranged around a prominent upper hub (101; 101').

11. Food preparation household electrical appliance, comprising a pressing screw (7; 7') driven in rotation about a mainly vertical shaft (15; 15') in a working chamber (2) having at least one food introduction chute (40) communicating with the upper end of the pressing screw (7; 7'), and a discharge outlet (9), **characterised in that** the pressing screw (7; 7') is part of a rotary working member (100; 100') according to one of claims 1 to 10.

12. Electrical household food preparation appliance according to claim 11, **characterised in that** the rotary working member (100; 100') is removably mounted in the working chamber (2).

13. Electrical household food preparation appliance according to claim 11 or 12, **characterised in that** it comprises a box (1) housing an electric motor (11) connected to an upper drive outlet (12) provided for driving the rotary working member (100; 100').

14. Electrical household food preparation appliance according to claim 13, **characterised in that** the working chamber (2) is removably mounted on the box (1).

15. Electrical household food preparation appliance according to one of claims 11 to 14, **characterised in that** a filter element (5) separates the working chamber (2) into a first compartment (6) housing the rotary working member (100; 100') and a second compartment (8) having the discharge outlet (9).
